# EUROPEAN PATENT APPLICATION

(11) **EP 4 797 497 A1**
(43) Date of publication of application: **26.08.2026**
(21) Application number: 23955890.1
(22) Date of filing: 20.11.2023
(51) Int. Cl.: H02J 50/10, H02J 7/00, G01B 7/004, G01C 21/00

(54) **RECHARGING POSITIONING METHOD, SELF-MOVING DEVICE AND VEHICLE BODY POSITIONING SYSTEM**

(30) Priority: 20.10.2023 CN 202311371360; 20.10.2023 CN 202322839738 U
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHU, Taotao, Shenzhen, Guangdong 518000 (CN); SONG, Yongqi, Shenzhen, Guangdong 518000 (CN); HAN, Baofeng, Shenzhen, Guangdong 518000 (CN); ZHENG, Chuwei, Shenzhen, Guangdong 518000 (CN); CHEN, Yufan, Shenzhen, Guangdong 518000 (CN)
(74) Representative: Abel & Imray LLP
(86) International application number: PCT/CN2023/132587
(87) International publication number: WO 2025/081572

(57) **Abstract**

A recharging positioning method, a self-moving device, and a vehicle body positioning system are provided, and relate to the technical field of recharging positioning of self-moving devices. A positioning induction value is generated by induction between the self-moving device and a target charging station, and the self-moving device is provided with a magnetic induction sensor. The recharging positioning method comprises: acquiring the positioning induction value on a recharging path through the magnetic induction sensor, wherein the recharging path refers to a path along which the self-moving device moves toward the target charging station; and performing recharging positioning on the self-moving device according to the positioning induction value.

## Description

This application claims priority to Chinese Patent Application No. 202311371360.8, filed on Oct. 20, 2023, and titled "Recharging Positioning Method, System, Self-Moving Device and Readable Storage Medium", the entire contents of which are incorporated herein by reference.

This application claims priority to Chinese Patent Application No. 202322839738.4, filed on Oct. 20, 2023, and titled "Vehicle Body Positioning System and Vehicle Body Charging Equipment", the entire contents of which are incorporated herein by reference.

### Technical field

The present application relates to the technical field of recharging positioning in self-moving devices, and in particular to a recharging positioning method, a self-moving device, and a vehicle body positioning system.

### Background

When a robot performs recharging positioning, infrared positioning, laser positioning and the like are generally used, and positioning information is calculated by receiving reflected signals. However, the inventors have found that reflected signals are easily affected by terrain obstruction or ambient light. For example, in a scenario with strong sunlight or strong reflection from a snow surface, positioning methods such as infrared positioning and laser positioning may fail, resulting in reduced positioning accuracy and thus relatively large positioning errors. Therefore, current self-moving devices have low recharging positioning accuracy.

The above content is provided only to assist in understanding the technical solution of the present application, and does not represent an admission that the above content constitutes prior art.

### Summary

The main purpose of the present application is to provide a recharging positioning method, a self-moving device, and a vehicle body positioning system, so as to solve the technical problem that existing recharging positioning technology is easily affected by the environment and has low positioning accuracy.

In order to achieve the above purpose, the present application provides a recharging positioning method, which is applied to a self-moving device, wherein induction is performed between the self-moving device and a target charging station to generate a positioning induction value, and the self-moving device is provided with a magnetic induction sensor, the recharging positioning method comprising:
acquiring the positioning induction value on a recharging path through the magnetic induction sensor, wherein the recharging path refers to a path along which the self-moving device moves toward the target charging station; and
performing recharging positioning on the self-moving device according to the positioning induction value.

The present application further provides a self-moving device, wherein the self-moving device comprises a head, a body, a recharging positioning device, a memory, a processor, and a recharging positioning program for the self-moving device stored in the memory and executable on the processor, the head being detachably connected to the body, and the recharging positioning device, the memory and the processor being arranged on the body, wherein the recharging positioning program for the self-moving device is configured to implement the steps of the above recharging positioning method.

The present application further provides a vehicle body positioning system, wherein the vehicle body positioning system comprises the above self-moving device, and the self-moving device comprises the head and the body; the body is provided with a sensing assembly;
the vehicle body positioning system further comprises a positioning device, wherein the positioning device comprises a base and a coil assembly, and the coil assembly is mounted on the base;
wherein, when the sensing assembly and the coil assembly correspond in position, the sensing assembly and the coil assembly perform induction to locate a position of the body.

The present application provides a recharging positioning method, which is applied to a self-moving device, wherein induction is performed between the self-moving device and a target charging station to generate a positioning induction value, and the self-moving device is provided with a magnetic induction sensor, the recharging positioning method comprising: acquiring the positioning induction value on a recharging path through the magnetic induction sensor, wherein the recharging path refers to a path along which the self-moving device moves toward the target charging station; and performing recharging positioning on the self-moving device according to the positioning induction value. First, the recharging path of the self-moving device is determined; then, based on the magnetic induction sensor provided on the self-moving device, the positioning induction value generated by electromagnetic induction between the self-moving device and the target charging station is collected; and finally, recharging positioning is performed on the self-moving device according to the positioning induction value, thereby achieving the purpose of enabling the self-moving device to perform recharging positioning with respect to the target charging station through electromagnetic induction. Since the electromagnetic induction generated when the magnetic induction sensor approaches an induction coil has the characteristics of strong penetration and not being absorbed by substances such as water, soil and concrete, accurate positioning results can still be maintained in a complex outdoor environment. Therefore, during recharging positioning, it is unnecessary to calculate positioning information by receiving reflected signals. As a result, the technical defect is overcome that, during recharging positioning, the positioning signal is affected by terrain obstruction or ambient light, causing deviation in the calculation result of position coordinates and a reduction in positioning accuracy, and further causing the recharging positioning result to be liable to mismatch with a charging area of the charging station. Therefore, the recharging positioning accuracy of the self-moving device is improved.

In the vehicle body positioning system of the present application, movement of the body of the self-moving device drives the sensing assembly to gradually approach the coil assembly on the base. When the sensing assembly and the coil assembly correspond in position, the coil assembly generates a magnetic field, and the sensing assembly and the coil assembly are electromagnetically induced to locate the position of the body on the base, thereby improving the positioning accuracy of the body.

Details of one or more embodiments of the present application are set forth in the following drawings and description, and other features and advantages of the present application will become apparent from the description, the drawings, and the claims.

### Brief Description of the Drawings

The accompanying drawings are incorporated into and constitute a part of this specification, illustrate embodiments consistent with the present application, and, together with the specification, serve to explain the principles of the present application.

In order to describe the technical solutions in the embodiments of the present application or in the prior art more clearly, the accompanying drawings required for describing the embodiments or the prior art will be briefly introduced below. Obviously, a person of ordinary skill in the art may obtain other drawings based on these drawings without inventive effort.
Fig. 1 is a schematic flowchart of a recharging positioning method according to Embodiment 1 of the present application.
Fig. 2 is a schematic diagram of installation positions of a beacon coil and a recharging positioning coil on a charging station in the recharging positioning method according to Embodiment 1 of the present application.
Fig. 3 is a schematic diagram of a recharging action of a self-moving device to which the recharging positioning method according to Embodiment 1 of the present application is applied.
Fig. 4 is a schematic flowchart of a recharging positioning method according to Embodiment 2 of the present application.
Fig. 5 is a schematic diagram illustrating implementation of the recharging positioning method according to Embodiment 2 of the present application.
Fig. 6 is a schematic diagram of a module structure of a recharging positioning system according to Embodiment 3 of the present application.
Fig. 7 is a schematic diagram of a device structure of a hardware operating environment involved in the recharging positioning method according to an embodiment of the present application.
Fig. 8 is a schematic structural diagram of one embodiment of a vehicle body positioning system according to the present application.
Fig. 9 is a schematic structural diagram of another embodiment of a vehicle body positioning system according to the present application.
Fig. 10 is a schematic structural diagram of still another embodiment of a vehicle body positioning system according to the present application.

Reference signs in the accompanying drawings are as follows.

| Reference sign | Name | Reference sign | Name |
|---|---|---|---|
| 100 | Vehicle body positioning system | 10 | Housing |
| 20 | Induction assembly | 21 | Receiving plate |
| 211 | First plate member | 212 | Second plate member |
| 22 | Inductor | 221 | First inductor |
| 222 | Second inductor | 30 | Positioning device |
| 31 | Coil assembly | 311 | Positioning element |
| 312 | Beacon element | 32 | Base |
| 40 | Connecting mechanism | 41 | First connector |
| 42 | Second connector | 43 | Third connector |
| 1 | Head | 2 | Body |

The realization, functional characteristics and advantages of the purpose of this application will be further explained with reference to the attached drawings and examples.

### Detailed description of the disclosed embodiments

In order to make the above objects, features and advantages of this application more clear and easy to understand, the technical solutions of the embodiments will be described clearly and completely with the attached drawings. Obviously, the described embodiments are merely part of the embodiments of this application, not all of them. Based on the embodiments in this application, all other embodiments obtained by those of ordinary skill in the art without creative effort belong to the protection scope of this application.

### Embodiment 1

With the continuous development of science and technology, self-moving devices are being used more and more widely in various scenarios. Outdoor mobile robots for snow removal, grass mowing, leaf blowing, and golf ball picking have emerged. After a self-moving device has operated outdoors for a period of time, it needs to search for the position of a charging station and return to the charging station for recharging.

That is, when the self-moving device works outdoors, it may face a situation in which it needs to return to the charging station for recharging. Most existing recharging methods employ wireless charging, and wireless charging requires high positioning accuracy. Therefore, it is necessary to use a positioning technology having high positioning accuracy to ensure that the self-moving device can achieve recharging positioning more efficiently.

In order to realize recharging positioning of the self-moving device, infrared positioning or radar positioning technology is usually adopted. Both infrared positioning and radar positioning use an echo ranging method, that is, the distance is determined by measuring a phase difference of a transmitted signal traveling back and forth over a measured distance. Some self-moving devices also use a single-antenna RTK (Real-Time Kinematic) system for positioning. In complex environments, such as scenarios involving strong reflection from a snow surface or shielding by tree shade, such positioning technologies are prone to poor signals or positioning failure, and positioning accuracy is also affected.

In summary, currently used positioning technologies are easily affected by the environment, resulting in inaccurate positioning results or positioning failure, and thus causing the self-moving device to have low positioning accuracy during recharging positioning.

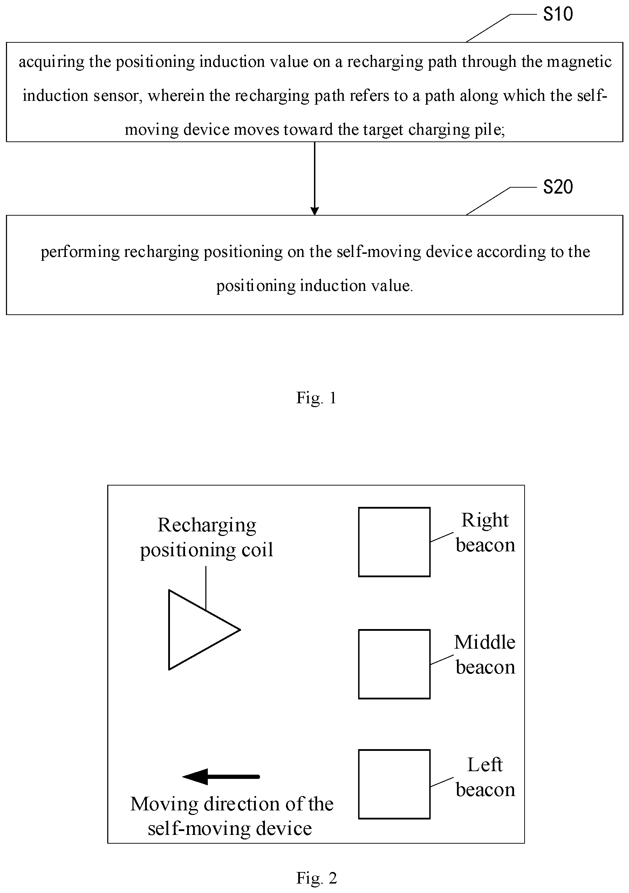

Based on this, Embodiment 1 of the present application provides a recharging positioning method, which is applied to a self-moving device, the self-moving device being provided with a magnetic induction sensor. Referring to Fig. 1, the recharging positioning method comprises:
Step S10: acquiring the positioning induction value on a recharging path through the magnetic induction sensor, wherein the recharging path refers to a path along which the self-moving device moves toward the target charging station; and
Step S20: performing recharging positioning on the self-moving device according to the positioning induction value.

In this embodiment, it should be noted that there are various ways of causing the self-moving device, during outdoor operation, to move toward the target charging station and perform recharging positioning. Specifically, for example, the operation may be initiated in response to a received instruction or autonomously initiated. In one possible implementation, when the self-moving device detects that its battery level has dropped to a certain threshold, the recharging function is autonomously initiated.

In addition, it should be noted that the recharging path is used to represent a path along which the self-moving device moves toward the target charging station in order to achieve recharging after the recharging function is initiated and the position of the target charging station is obtained. When the self-moving device moves toward the target charging station along the recharging path, the positioning induction value on the target charging station is sensed through the magnetic induction sensor on the self-moving device. The magnetic induction sensor is used for electromagnetic induction and can output a magnetic induction value. The sensed positioning induction value is a magnetic induction signal. One or more magnetic induction sensors may be provided. Coils included in the coil assembly mounted on the target charging station may specifically include a communication coil, a beacon coil, and a recharging positioning coil. The communication coil is used to realize wireless communication between the self-moving device and the target charging station; the beacon coil is used to generate a magnetic induction effect during a first positioning process with the magnetic induction sensor provided on the self-moving device; and the recharging positioning coil is used to generate a magnetic induction effect during a second positioning process with the magnetic induction sensor provided on the self-moving device, so as to output the positioning induction value.

It can be understood that, in order to accurately perform recharging positioning even in a complex environment, an electromagnetic induction positioning technology is adopted. The positioning induction value is obtained by sensing a coil through the magnetic induction sensor, and the position of the magnetic induction sensor is determined according to the positioning induction value, thereby determining the position of the self-moving device and realizing recharging positioning of the self-moving device.

It can further be understood that, after the magnetic induction sensor on the self-moving device senses the coil on the target charging station, the self-moving device does not need to measure distance by calculating a phase difference of a signal traveling back and forth over a measured distance. Instead, the self-moving device can perform recharging positioning according to the positioning induction value of the magnetic induction sensor, and can adjust its position according to a magnitude of the positioning induction value.

As an example, steps S10 to S20 may include: using the magnetic induction sensor mounted on the self-moving device to detect the coil on the target charging station on the recharging path, and acquiring the positioning induction value sensed by the magnetic induction sensor, wherein the recharging path refers to a path along which the self-moving device moves toward the target charging station; and determining the position of the magnetic induction sensor on the target charging station according to the sensed positioning induction value, thereby moving the self-moving device to perform recharging positioning such that the magnetic induction sensor falls within the recharging positioning coil.

The present application provides a recharging positioning method. When the self-moving device needs recharging and moves toward the target charging station, the magnetic induction sensor mounted on the self-moving device senses the positioning induction value on the target charging station, and recharging positioning is performed on the self-moving device according to the positioning induction value. In the embodiment of the present application, the magnetic induction sensor and the coil are used for induction, and the magnetic induction signal generated by the induction is measured. The position of the self-moving device is determined and adjusted according to the magnetic induction signal, so as to complete recharging positioning of the self-moving device. By utilizing the characteristic that the magnetic induction signal is not interfered with by water, soil, rocks and the like, the self-moving device does not need to be positioned by echo ranging during recharging positioning, thereby avoiding the influence of environmental factors and the like on positioning performance. In addition, because the positioning induction value is directly used for determination, the positioning result is controlled within a precision requirement range of recharging positioning. Therefore, the recharging positioning accuracy of the self-moving device is improved.

The positioning induction value includes a pre-positioning induction value and a recharging positioning induction value, and the step of performing recharging positioning on the self-moving device according to the positioning induction value comprises:
Step A10: detecting whether a current beacon at which the self-moving device is located is a middle beacon, wherein the current beacon is arranged on the target charging station;
Step A20: if the self-moving device is located at the middle beacon, performing recharging positioning on the self-moving device according to the recharging positioning induction value; and
Step A30: if the self-moving device is not located at the middle beacon, moving the self-moving device according to the pre-positioning induction value until the self-moving device is moved to the middle beacon.

In this embodiment, it should be noted that the pre-positioning induction value is used to determine a beacon position at which the self-moving device is located, that is, to preliminarily determine a position of the self-moving device on the charging station. For example, the pre-positioning induction value may be a magnetic induction value between the magnetic induction sensor on the self-moving device and a beacon. The recharging positioning induction value is used to determine that the magnetic induction sensor on the self-moving device has completely fallen within the recharging positioning coil on the charging station. For example, the recharging positioning induction value may be a magnetic induction value between the magnetic induction sensor and the recharging positioning coil.

In addition, it should be noted that a beacon (i.e., beacon element 312 mentioned below) may be provided on the target charging station, and the beacon is used to assist the self-moving device in performing recharging positioning more quickly. The magnetic induction sensor on the self-moving device detects the current beacon at which the self-moving device is located according to a relative positional relationship between the magnetic induction sensor and the beacon. The beacon is arranged on the target charging station, and one or more beacons may be provided. When a plurality of beacons are provided, the beacons are arranged side by side and at intervals on the base of the target charging station. Specifically, three beacons may be provided, and the beacon located in the middle of the three beacons is referred to as the middle beacon. The middle beacon and the recharging positioning coil are located on the same horizontal line, and a middle beacon coil is parallel to a bottom edge of the recharging positioning coil. Therefore, when the self-moving device moves to a position of the middle beacon, the self-moving device may translate in a direction toward the recharging positioning coil and sense the recharging positioning coil. A beacon overlapping the magnetic induction sensor to the greatest extent, or a beacon at which the magnetic induction sensor is currently located, may be taken as the current beacon. In addition, three magnetic induction sensors may be provided. For example, when two magnetic induction sensors are both located above the middle beacon, it may be determined that the current beacon at which the self-moving device is located is the middle beacon. The magnetic induction sensor may also be located between adjacent beacons.

In one possible implementation, in order to facilitate understanding of installation positions of the beacon coil and the recharging positioning coil on the charging station, reference may be made to Fig. 2, which shows a schematic diagram of installation positions of the beacon coil and the recharging positioning coil on the charging station. Three beacons, namely a left beacon, a middle beacon, and a right beacon, are mounted on the charging station, and a triangular recharging positioning coil is also mounted thereon. The triangular recharging positioning coil and the middle beacon coil are mounted on the same horizontal line, and a bottom edge of the triangular recharging positioning coil is parallel to the middle beacon coil.

It should be noted that positional relationships exist among the beacons. When the self-moving device is located at different beacons, the sensed pre-positioning induction values are different, and magnitudes of the pre-positioning induction values are associated with one another. Therefore, when the self-moving device is located at a position other than the middle beacon, the self-moving device may be moved according to positional relationships among the beacons and the pre-positioning induction values, so that the magnetic induction sensor on the self-moving device is positioned within the middle beacon coil.

As an example, steps A10 to A30 may include: determining, according to the pre-positioning induction value detected by the magnetic induction sensor, whether the current beacon at which the self-moving device is located is the middle beacon; if the self-moving device is located at the middle beacon, moving the self-moving device and detecting the recharging positioning induction value on the recharging positioning coil; and if the self-moving device is not located at the middle beacon, determining the current beacon position of the self-moving device, and moving the self-moving device according to a positional relationship between the current beacon and the middle beacon until the self-moving device is moved to the middle beacon.

The pre-positioning induction value contains a periodic signal. By calculating a time occupied by a high level within one preset period, a duty cycle of the high level is obtained. Since the magnetic induction sensor detects different beacons and obtains different duty cycles, and the different duty cycles may be implemented by a switching circuit, the current beacon at which the self-moving device is located may also be determined according to different duty cycles, thereby improving the accuracy of determining the current beacon at which the self-moving device is located. Specifically, the step of detecting whether the current beacon is the middle beacon according to a duty cycle corresponding to the pre-positioning induction value may include: determining the duty cycle corresponding to the pre-positioning induction value; and determining the current beacon at which the self-moving device is located according to the duty cycle. That is, when the magnetic induction sensor on the self-moving device moves to a beacon position, the pre-positioning induction value is detected, the duty cycle of the high level in the pre-positioning induction value is calculated, and the current beacon at which the self-moving device is located is determined according to the calculated duty cycle.

The step of performing recharging positioning on the self-moving device according to the positioning induction value comprises:
Step C10: detecting whether the recharging positioning induction value reaches a preset magnetic induction threshold;
Step C20: if yes, determining that recharging positioning of the self-moving device is completed;
Step C30: if not, adjusting a position of the self-moving device to obtain an adjusted position; and
Step C40: taking a magnetic induction value sensed by the magnetic induction sensor at the adjusted position as the positioning induction value, and returning to the step of detecting whether the positioning induction value reaches the preset magnetic induction threshold.

In this embodiment, it should be noted that the recharging positioning induction value is an induction value obtained by the magnetic induction sensor on the self-moving device with respect to the recharging positioning coil on the charging station. For example, the recharging positioning coil may be a triangular coil, and three magnetic induction sensors may be provided. According to a magnitude relationship between the recharging positioning induction values detected by the three magnetic induction sensors and the preset magnetic induction threshold, the position of the self-moving device is adjusted. When the recharging positioning induction value reaches the preset magnetic induction threshold, it indicates that all of the magnetic induction sensors have fallen within the recharging positioning coil. At this point, movement of the self-moving device may be stopped, recharging positioning is determined to be completed, and a signal indicating that charging can be performed is sent to a charging module of the self-moving device.

In addition, it should be noted that, in order to determine the positional relationship between the self-moving device and the recharging positioning coil more accurately, a magnetic induction threshold is preset for the magnetic induction sensor. For example, in a triangular coil, due to triangular distribution, magnetic field strengths at three sides are the same, and therefore magnetic induction values of the magnetic induction sensor at the three sides of the triangle are the same, such that the preset magnetic induction threshold is also the same. When the magnetic induction sensor on the self-moving device senses the recharging positioning coil from various angles, the sensed magnetic induction values are the same.

It can be understood that, when the recharging positioning induction value reaches the preset magnetic induction threshold, the magnetic induction sensor has fallen within the recharging positioning coil, and recharging positioning is considered completed. At this time, a distance between the charging module on the self-moving device and a charging module on the charging station falls within an error range of recharging positioning, and charging may be performed.

As an example, steps C10 to C40 may include: during recharging positioning of the self-moving device, moving the position of the self-moving device according to a relationship between the recharging positioning induction value detected by the magnetic induction sensor with respect to the recharging positioning coil and the preset magnetic induction threshold. Since magnetic field strengths at the three sides are the same in the triangular coil, when the recharging positioning induction values detected by the three magnetic induction sensors on the self-moving device are all the same, it indicates that all of the magnetic induction sensors are located within the triangular coil, and the self-moving device has completed recharging positioning.

Before the step of acquiring the positioning induction value on the recharging path through the magnetic induction sensor, the recharging positioning method further comprises:
Step D10: detecting, by a preset sensor in the self-moving device, whether a first obstacle exists between the target charging station and the self-moving device;
Step D20: if the first obstacle exists, determining whether to move the movable obstacle when the first obstacle is detected as a movable obstacle;
Step D30: if the first obstacle does not exist, controlling the self-moving device to move to a first preset position;
Step D40: detecting, at the first preset position, whether a second obstacle exists on a recharging positioning surface of the target charging station; and
Step D50: if the second obstacle exists, cleaning the second obstacle, and, after determining that cleaning is completed, determining whether the recharging positioning surface satisfies a recharging positioning condition by performing secondary detection on the recharging positioning surface.

In this embodiment, it should be noted that the first obstacle refers to an obstacle between the self-moving device and the target charging station, and the second obstacle refers to an obstacle on the recharging positioning surface of the target charging station. For example, the first obstacle may be an obstacle such as a cardboard box, a wood block, or a stone pile, and the second obstacle may be an obstacle such as snow or leaves.

In addition, it should be noted that the first preset position refers to a position at which, after the self-moving device starts the recharging function, obtains the position of the target charging station through a pre-positioning module mounted on the self-moving device, and moves toward the target charging station, the self-moving device stops moving and detects the positioning induction value on the target charging station. Specifically, the pre-positioning module may be an RTK module. A distance between the self-moving device and the target charging station when the self-moving device stops moving may be, for example, 1 m, 2 m, or 3 m. When the self-moving device moves from a remote position toward the target charging station and reaches the first preset position corresponding to the target charging station, the self-moving device stops moving, and the preset sensor in the self-moving device detects whether the first obstacle exists between the self-moving device and the target charging station. Specifically, the preset sensor in the self-moving device may be a camera.

When the first obstacle exists, the type of the first obstacle is detected. Specifically, the first obstacle may be a movable obstacle or an immovable obstacle. If the first obstacle is detected as a movable obstacle, the first obstacle is moved in a direction away from the charging station, wherein the direction away from the charging station may specifically be a direction opposite to the charging station relative to the self-moving device. If the first obstacle is an immovable obstacle, the self-moving device moves toward the target charging station along a travel path away from the obstacle according to an identified direction of the first obstacle.

In addition, after the first obstacle is determined to be a movable obstacle, it may further be autonomously determined whether to move the movable obstacle. If it is determined to move the movable obstacle, movement may be performed with reference to the following: the self-moving device is adjusted to move backward by a certain distance, the head of the self-moving device is lowered to the ground, and the movable obstacle is moved in a direction away from the charging station.

In addition, it should be noted that, when no first obstacle exists between the self-moving device and the target charging station, the recharging positioning surface of the target charging station is further detected to determine whether the second obstacle exists on the recharging positioning surface. When the second obstacle exists on the recharging positioning surface, since the second obstacle affects the charging effect, it is necessary to clean the second obstacle. During the cleaning process, the self-moving device exits the charging station and performs secondary detection on the recharging positioning surface to determine whether the second obstacle still exists on the recharging positioning surface. If the second obstacle still exists, the recharging positioning surface continues to be cleaned until it is determined that the second obstacle does not exist on the recharging positioning surface. At this time, the recharging positioning surface is considered to satisfy the recharging positioning condition, and the self-moving device may move to the target charging station to start recharging positioning, wherein the recharging positioning condition means that no condition affecting recharging positioning of the self-moving device exists on the recharging positioning surface.

In addition, it should be noted that an instruction for the self-moving device to clean the second obstacle may specifically be set by a user according to a detection result of the self-moving device with respect to the recharging positioning surface, or may be autonomously determined by the self-moving device according to the detection result.

As an example, steps D10 to D50 may include: detecting, by the preset sensor in the self-moving device, whether a first obstacle such as a cardboard box or a stone pile exists between the self-moving device and the target charging station; if the first obstacle is detected, detecting an obstacle type of the first obstacle; when the first obstacle is detected as a movable obstacle, determining whether to move the movable obstacle; if it is determined to move the movable obstacle, moving the first obstacle in a direction away from the charging station; after eliminating an influence of the first obstacle on recharging positioning of the self-moving device, moving the self-moving device to the first preset position; detecting, at the first preset position, the recharging positioning surface of the target charging station to determine whether the second obstacle exists; when the second obstacle is determined to exist, performing cleaning and, during the cleaning process, exiting the charging station and detecting the recharging positioning surface again to determine whether the second obstacle exists, until interference of the second obstacle with the recharging positioning function is eliminated, so that the self-moving device moves toward the target charging station to start recharging positioning.

The step of detecting, at the first preset position, whether the second obstacle exists on the recharging positioning surface of the target charging station comprises:
Step E10: acquiring, at the first preset position, real-time body data corresponding to the recharging positioning surface of the target charging station;
Step E20: extracting historical body data corresponding to the recharging positioning surface, wherein the historical body data refers to body data of the self-moving device when the second obstacle is absent from the recharging positioning surface; and
Step E30: determining whether the second obstacle exists on the recharging positioning surface of the target charging station by comparing the real-time body data with the historical body data.

In this embodiment, it should be noted that detection of the second obstacle may be performed through body data of the self-moving device. For example, assuming that the second obstacle is accumulated snow, body data may be collected through an IMU sensor carried by the self-moving device, and whether snow exists on the recharging positioning surface may be determined by comparing body data at different time periods on the recharging positioning surface. That is, a sensor mounted on the self-moving device acquires body data when the second obstacle is absent from the recharging positioning surface and stores the body data. During recharging, the sensor in the self-moving device is used again to acquire current body data, and the current body data is compared with previously stored body data to determine whether the recharging positioning surface needs to be cleaned. For example, the sensor may be an inertial sensor, and the acquired body data may be inclination-angle data of the body relative to the recharging positioning surface.

As an example, steps E10 to E30 may include: acquiring, at the first preset position, the real-time body data corresponding to the recharging positioning surface of the target charging station; extracting historical body data corresponding to the recharging positioning surface, wherein the historical body data refers to body data of the self-moving device when the second obstacle is absent from the recharging positioning surface; and determining whether the second obstacle exists on the recharging positioning surface of the target charging station by comparing the real-time body data with the historical body data.

The recharging positioning method further comprises:
Step F10: acquiring a communication condition between the self-moving device and the target charging station;
Step F20: if the communication condition is abnormal, after the self-moving device is located at the first preset position, acquiring the positioning induction value on the recharging path through the magnetic induction sensor to determine whether the target charging station has moved; and
Step F30: if it is determined that the charging station has moved, controlling the self-moving device to move to a second preset position at which a preset charging station is currently located.

In this embodiment, it should be noted that, before the self-moving device moves to the first preset position of the target charging station, the communication condition between the self-moving device and the target charging station is first determined, and whether to move the self-moving device for recharging positioning is determined according to a determination result of the communication condition. For example, when the communication condition between the self-moving device and the target charging station is normal, the self-moving device may be directly controlled to move to the first preset position and perform inductive charging. When the communication condition between the self-moving device and the target charging station is abnormal, the self-moving device is first controlled to move to the first preset position, and whether the target charging station has moved is determined based on an induction condition of the positioning induction value, that is, the magnetic induction sensor senses the beacon on the target charging station to determine whether the positioning induction value can be sensed. If the magnetic induction sensor cannot sense the positioning induction value, it is determined that the target charging station has moved. If the magnetic induction sensor can sense the positioning induction value, electromagnetic induction may be performed between the magnetic induction sensor and the target charging station.

After it is determined that the target charging station has moved, the self-moving device reacquires the second preset position of the preset charging station. The second preset position may be a position of the target charging station searched for by the self-moving device, or may be a position of the target charging station set by a user after information indicating that the target charging station is not at the preset position is fed back to a user terminal. The preset charging station may be the target charging station or an alternative charging station. When the preset charging station is the target charging station, recharging positioning may be performed by requesting, from the user terminal, a latest position of the target charging station. When the preset charging station is the alternative charging station, communication may be established with the alternative charging station, and the alternative charging station sends a third preset position to the self-moving device; alternatively, recharging positioning may be performed by requesting, from the user terminal, the third preset position of the alternative charging station.

In addition, it should be noted that wireless communication exists between the self-moving device and the target charging station, and the wireless communication has a preset communication range, so that the communication condition between the self-moving device and the target charging station may be detected. Specifically, a normal communication condition may mean that the self-moving device can search for the position of the target charging station within the preset communication range, and an abnormal communication condition may mean that, due to communication interference, a problem with a communication module, or an excessive communication distance, the self-moving device cannot search for the position of the target charging station within the preset communication range. Therefore, when the magnetic induction sensor cannot sense the positioning induction value at the first preset position, it indicates that the target charging station has moved in position. At this time, the user may be prompted to reset the position of the target charging station or establish communication with the alternative charging station.

In one possible implementation, the position of the alternative charging station may be determined according to coordinates of the current self-moving device and coordinates of the charging station obtained through a positioning module on the self-moving device.

In addition, it should be noted that, after each recharging process is completed, the self-moving device may be corrected by resetting a position of a current charging point. When the self-moving device needs recharging again, the self-moving device will move toward a position of the charging station used for the last charging operation, thereby improving recharging efficiency and accuracy.

As an example, steps F10 to F30 may include: acquiring the communication condition between the self-moving device and the target charging station; when the communication condition is abnormal, after the self-moving device is located at the first preset position, acquiring the positioning induction value on the recharging path through the magnetic induction sensor to determine whether the target charging station has moved; and, when it is determined that the charging station has moved, controlling the self-moving device to move to the second preset position at which the preset charging station is currently located, wherein the preset charging station may be the alternative charging station or the target charging station.

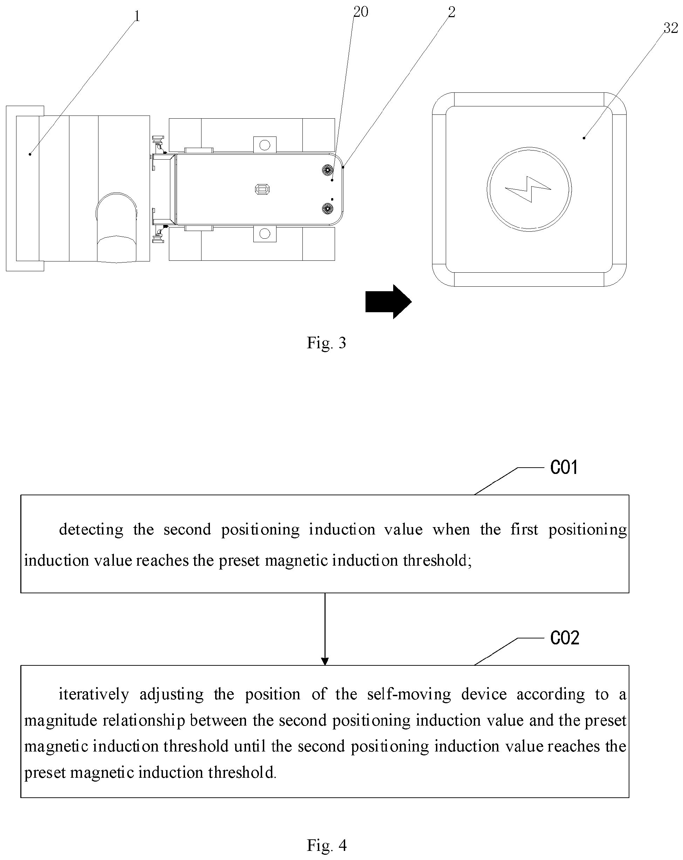

In one possible implementation, in order to facilitate understanding of the technical concept or technical principle of the present application, reference may be made to Fig. 3, which shows a schematic diagram of a recharging action of a self-moving device to which the recharging positioning method is applied. Exemplarily, the self-moving device includes a head, a body, and a magnetic induction sensor. When the self-moving device reaches the target charging station for charging, the self-moving device moves backward toward the target charging station along a direction indicated by an arrow in the figure, and the magnetic induction sensor mounted on the body senses the charging station to obtain the positioning induction value.

### Embodiment 2

Based on Embodiment 1 of the present application, in another embodiment of the present application, for content that is the same as or similar to that in Embodiment 1 above, reference may be made to the foregoing description, and details thereof are not repeated herein.

On this basis, referring to Fig. 4, the target charging station is provided with a coil assembly, and the magnetic induction sensor and the coil assembly perform induction when their positions correspond to generate the positioning induction value. The magnetic induction sensor comprises a first magnetic induction sensor and a second magnetic induction sensor, and the first magnetic induction sensor and the second magnetic induction sensor are distributed in a triangular manner. The positioning induction value comprises a first positioning induction value sensed by the first magnetic induction sensor and a second positioning induction value sensed by the second magnetic induction sensor. The step of performing recharging positioning on the self-moving device according to the positioning induction value comprises:
Step C01: detecting the second positioning induction value when the first positioning induction value reaches the preset magnetic induction threshold; and
Step C02: iteratively adjusting the position of the self-moving device according to a magnitude relationship between the second positioning induction value and the preset magnetic induction threshold until the second positioning induction value reaches the preset magnetic induction threshold.

In this embodiment, it should be noted that the target charging station is provided with a coil assembly, and induction between the target charging station and the self-moving device may specifically be achieved through induction between the coil assembly and the magnetic induction sensor when their positions correspond to each other, thereby generating the positioning induction value. The magnetic induction sensor comprises a first magnetic induction sensor and a second magnetic induction sensor. Specifically, the first magnetic induction sensor may be composed of two magnetic induction sensors, and the second magnetic induction sensor may be composed of one magnetic induction sensor. The first magnetic induction sensor and the second magnetic induction sensor are distributed in a triangular manner, so as to facilitate induction between the first magnetic induction sensor and the second magnetic induction sensor and the recharging positioning coil. Specifically, the recharging positioning coil may be a triangular recharging positioning coil.

When recharging positioning is performed on the self-moving device according to the positioning induction value, only the first positioning induction value sensed by the first magnetic induction sensor may initially be used. When the first magnetic induction sensor senses a magnetic field of the recharging positioning coil, and the first positioning induction value falls within a preset magnetic induction threshold range, a magnetic induction value corresponding to the second positioning induction value is detected as changing from absent to present, until the second positioning induction value reaches the preset magnetic induction value, thereby realizing accurate recharging positioning of the self-moving device.

In addition, it should be noted that a sensing range of the magnetic induction sensor diverges outward from the magnetic induction sensor as a center, and therefore the sensing range of the magnetic induction sensor is a circular area.

It can be understood that, when both the first magnetic induction sensor and the second magnetic induction sensor perform induction with the triangular recharging positioning coil, the sensing range of the first magnetic induction sensor is inscribed within one angle of the triangular recharging positioning coil, and the sensing range of the second magnetic induction sensor is inscribed within one angle of the triangular recharging positioning coil, thereby completing accurate positioning of the self-moving device.

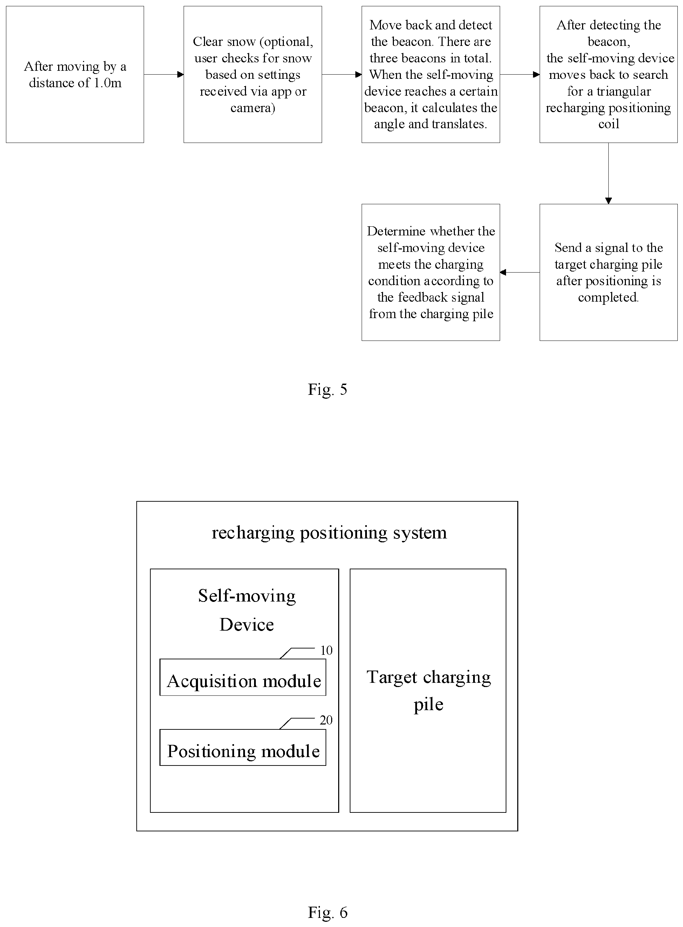

In one possible implementation, in order to facilitate understanding of the technical concept or technical principle of the present application, reference may be made to Fig. 5, which shows a schematic flowchart of recharging positioning.

After the self-moving device initiates the recharging function, the self-moving device moves toward the target charging station until stopping at the first preset position, and begins to identify whether interference from the first obstacle and the second obstacle exists during the recharging positioning process. After interference of obstacles with the recharging positioning function is eliminated, the self-moving device moves toward the target charging station and performs induction, through the magnetic induction sensor, with the coil mounted on the target charging station, and the self-moving device performs recharging positioning according to the sensed positioning induction value.

Specifically, in one possible implementation, when the self-moving device moves to a position 1.0 m away from the target charging station, obstacle identification is performed on the recharging positioning surface. An identification result may be displayed on a user terminal, and the user may select, according to the identification result, whether obstacles such as accumulated snow are to be cleaned, so as to eliminate influence of various obstacles on the recharging positioning function. After it is determined that no obstacle exists on the recharging positioning surface, the self-moving device is adjusted to move backward by a certain distance. The beacon coil on the target charging station is detected through the magnetic induction sensor to obtain a pre-positioning induction value. When the self-moving device moves to a beacon, a duty cycle of a high level in the sensed pre-positioning induction value is calculated, and a current beacon position is determined according to the duty cycle. When the self-moving device is not located at the middle beacon, a direction and an angle of the self-moving device are adjusted so that the self-moving device moves to a position of the middle beacon. When the self-moving device is located at the middle beacon, the self-moving device is moved to search for the triangular recharging positioning coil, until all magnetic induction sensors on the self-moving device are located within the recharging positioning coil, thereby completing recharging positioning. A charging request signal is then sent to the charging station, and whether the self-moving device satisfies a charging condition is determined according to a feedback signal from the charging station.

As an example, steps C01 to C02 may include: during recharging positioning through the magnetic induction sensor, since positions of the first magnetic induction sensor and the second magnetic induction sensor are distributed in a triangular manner, and the recharging positioning coil is a triangular coil, the magnetic induction sensors distributed on the triangle may perform induction with the triangular recharging positioning coil, and it is determined whether the positioning induction values all reach a preset magnetic induction threshold range, thereby completing positioning. During the positioning process, only two magnetic induction sensors are required for positioning. When the first positioning induction values sensed by the two magnetic induction sensors reach the preset magnetic induction threshold, determination of the second positioning induction value of the second magnetic induction sensor is additionally introduced, so as to improve accuracy of recharging positioning. By determining that the second magnetic induction sensor generates the second positioning induction value as changing from absent to present, and stopping movement of the self-moving device when the second positioning induction value reaches the preset magnetic induction threshold, recharging positioning is completed.

### Embodiment 3

The present application further provides a recharging positioning system. Referring to FIG. 6, the recharging positioning system includes a self-moving device and a target charging station. The target charging station and the self-moving device perform induction to generate a positioning induction value. The self-moving device is provided with a magnetic induction sensor, and the self-moving device includes an acquisition module 10 and a positioning module 20, wherein:
the acquisition module 10 is configured to acquire the positioning induction value on a recharging path through the magnetic induction sensor, wherein the recharging path refers to a path along which the self-moving device moves toward the target charging station; and
the positioning module 20 is configured to perform recharging positioning on the self-moving device according to the positioning induction value.

In an embodiment, the positioning induction value includes a pre-positioning induction value and a recharging positioning induction value, and the positioning module 20 is further configured to:
detect whether a current beacon at which the self-moving device is located is a middle beacon, wherein the current beacon is provided on the target charging station;
if the self-moving device is located at the middle beacon, perform recharging positioning on the self-moving device according to the recharging positioning induction value; and
if the self-moving device is not located at the middle beacon, move the self-moving device according to the pre-positioning induction value until the self-moving device is moved to the middle beacon.

In an embodiment, the positioning module 20 is further configured to:
detect whether the positioning induction value reaches a preset magnetic induction threshold;
if yes, determine that recharging positioning of the self-moving device is completed;
if not, obtain an adjusted position by adjusting the position of the self-moving device; and
take a magnetic induction value sensed by the magnetic induction sensor at the adjusted position as the positioning induction value, and return to the step of detecting whether the positioning induction value reaches the preset magnetic induction threshold.

In an embodiment, the target charging station is provided with a coil assembly, and the magnetic induction sensor and the coil assembly perform induction, when corresponding in position, to generate the positioning induction value, wherein the magnetic induction sensor includes a first magnetic induction sensor and a second magnetic induction sensor, the first magnetic induction sensor and the second magnetic induction sensor are arranged in a triangular distribution, the positioning induction value includes a first positioning induction value sensed by the first magnetic induction sensor and a second positioning induction value sensed by the second magnetic induction sensor, and the positioning module 20 is further configured to:
detect the second positioning induction value when the first positioning induction value reaches the preset magnetic induction threshold; and
iteratively adjust the position of the self-moving device according to a magnitude relationship between the second positioning induction value and the preset magnetic induction threshold until the second positioning induction value reaches the preset magnetic induction threshold.

In an embodiment, the self-moving device further includes a determination module, and the determination module is configured to:
detect, through a preset sensor in the self-moving device, whether a first obstacle exists between the target charging station and the self-moving device;
if the first obstacle exists, determine whether to move the movable obstacle when detecting that the first obstacle is a movable obstacle;
if the first obstacle does not exist, control the self-moving device to move to a first preset position;
detect, at the first preset position, whether a second obstacle exists on a recharging positioning surface of the target charging station; and
if the second obstacle exists, clean the second obstacle, and after determining that the cleaning is completed, determine, by performing secondary detection on the recharging positioning surface, whether the recharging positioning surface satisfies a recharging positioning condition.

In an embodiment, the self-moving device further includes a detection module, and the detection module is configured to:
acquire, at the first preset position, real-time body data corresponding to the recharging positioning surface of the target charging station;
extract historical body data corresponding to the recharging positioning surface, wherein the historical body data refers to body data of the self-moving device when the second obstacle does not exist on the recharging positioning surface; and
determine whether the second obstacle exists on the recharging positioning surface of the target charging station by comparing the real-time body data with the historical body data.

In an embodiment, the self-moving device further includes a control module, and the control module is configured to:
acquire a communication status between the self-moving device and the target charging station;
if the communication status indicates a communication abnormality, after the self-moving device is located at the first preset position, acquire the positioning induction value on the recharging path through the magnetic induction sensor, and determine whether the target charging station has moved; and
if it is determined that the target charging station has moved, control the self-moving device to move to a second preset position where the target charging station currently presetly is located.

The recharging positioning system provided in the present application employs the recharging positioning method in the foregoing Embodiment 1 or Embodiment 2, and can solve the technical problem that, in the recharging positioning process of an existing self-moving device, a relatively large positioning error is likely to occur, thereby reducing recharging positioning accuracy of the self-moving device. Compared with the prior art, the beneficial effects of the recharging positioning system provided in the embodiments of the present application are the same as the beneficial effects of the recharging positioning method provided in the foregoing embodiments, and other technical features in the recharging positioning system are the same as the features disclosed in the method of the foregoing embodiments, and thus details are not repeated herein.

### Embodiment 4

The present application further provides a self-moving device. The self-moving device includes: a head, a body, recharging positioning equipment, a memory, a processor, and a self-moving-device recharging positioning program stored in the memory and executable on the processor. The head is detachably connected to the body, the recharging positioning equipment, the memory, and the processor are arranged on the body, and the self-moving-device recharging positioning program is configured to implement the steps of the recharging positioning method described above.

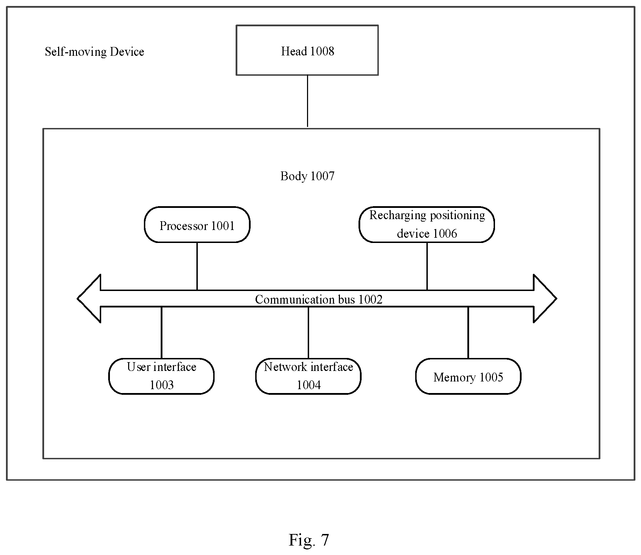

As shown in FIG. 7, the self-moving device may include: a processor 1001, for example, a central processing unit (Central Processing Unit, CPU), a communication bus 1002, a user interface 1003, a network interface 1004, a memory 1005, recharging positioning equipment 1006, a body 1007, and a head 1008. The communication bus 1002 is configured to implement connection and communication among these components. The user interface 1003 may include a display and an input unit such as a keyboard, and optionally, the user interface 1003 may further include a standard wired interface and a wireless interface. Optionally, the network interface 1004 may include a standard wired interface and a wireless interface, such as a Wireless Fidelity (Wi-Fi) interface. The memory 1005 may be a high-speed random access memory (Random Access Memory, RAM), or may be a stable non-volatile memory (Non-Volatile Memory, NVM), for example, a disk memory. Optionally, the memory 1005 may further be a storage device independent of the foregoing processor 1001. The recharging positioning equipment 1006 may include a magnetic induction sensor. Optionally, the recharging positioning equipment 1006 may further be a recharging positioning device independent of the foregoing processor 1001. The head 1008 is detachably connected to the body 1007, and the processor 1001, the communication bus 1002, the user interface 1003, the network interface 1004, the memory 1005, and the recharging positioning equipment 1006 are arranged on the body 1007.

Those skilled in the art can understand that the structure shown in FIG. 7 does not constitute a limitation on the self-moving device, and the self-moving device may include more or fewer components than those shown, may combine some components, or may have a different arrangement of components.

As shown in FIG. 7, the memory 1005, as a storage medium, may include an operating system, a data storage module, a network communication module, a user interface module, and a recharging positioning program.

In the self-moving device shown in FIG. 7, the network interface 1004 is mainly used for data communication with other devices; the user interface 1003 is mainly used for data interaction with a user; and the processor 1001, the memory 1005, and the recharging positioning equipment 1006 in the self-moving device may be arranged in the self-moving device. The self-moving device invokes, through the processor 1001, the recharging positioning program stored in the memory 1005, and controls the recharging positioning equipment 1006 to execute the recharging positioning method provided in the embodiments of the present application.

The self-moving device provided in the present application can, by using the recharging positioning method in the foregoing embodiments, solve the technical problem that, in the recharging positioning process of an existing self-moving device, a relatively large positioning error is likely to occur, thereby reducing recharging positioning accuracy of the self-moving device. Compared with the prior art, the beneficial effects of the self-moving device provided in the embodiments of the present application are the same as the beneficial effects of the recharging positioning method provided in the foregoing Embodiment 1 or Embodiment 2, and thus details are not repeated herein.

It should be understood that various parts of the present disclosure may be implemented by hardware, software, firmware, or a combination thereof. In the descriptions of the foregoing embodiments, specific features, structures, materials, or characteristics may be combined in a suitable manner in any one or more embodiments or examples.

The foregoing descriptions are merely specific implementations of the present application, but the protection scope of the present application is not limited thereto. Any changes or substitutions that can be readily conceived of by a person skilled in the art within the technical scope disclosed by the present application shall fall within the protection scope of the present application. Therefore, the protection scope of the present application shall be subject to the protection scope of the claims.

### Embodiment 5

The present application further provides a vehicle body positioning system.

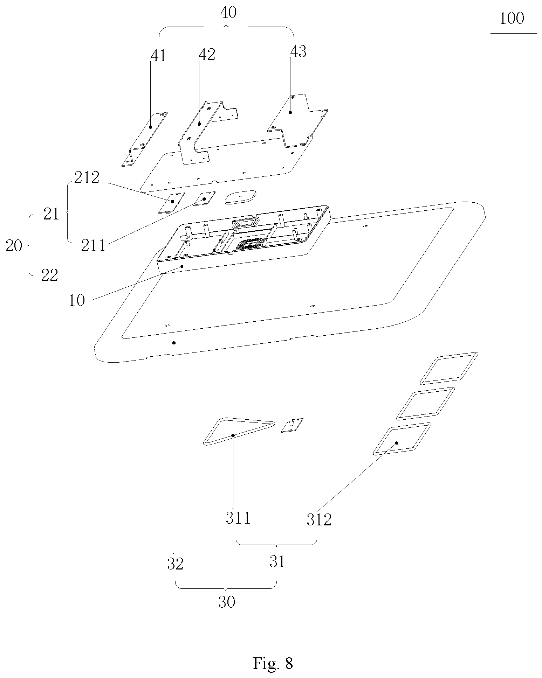

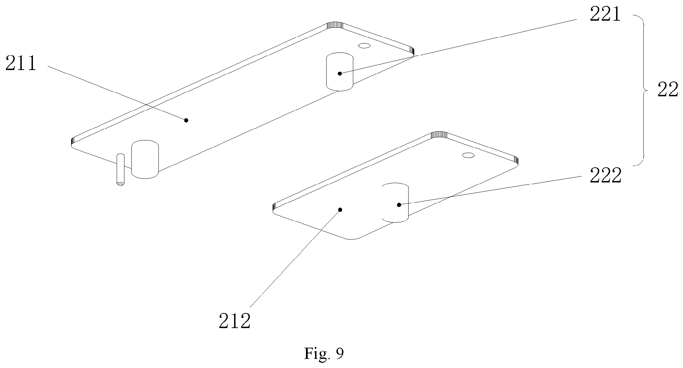

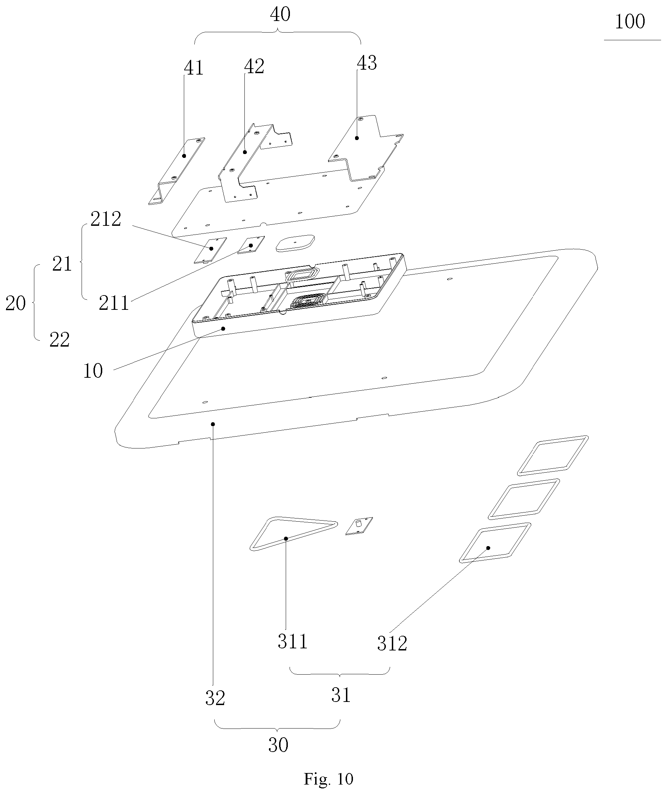

Referring to FIGS. 8 to 10, FIG. 8 is a schematic structural view of one embodiment of the vehicle body positioning system of the present application; FIG. 9 is a schematic structural view of another embodiment of the vehicle body positioning system of the present application; and FIG. 10 is a schematic structural view of yet another embodiment of the vehicle body positioning system of the present application.

In the embodiments of the present application, the vehicle body positioning system 100 includes the above self-moving device. As shown in FIGS. 8 to 10, the self-moving device includes a head 1 and a body 2, wherein each self-moving device necessarily includes the head 1 and the body 2, and the body may also be understood as a vehicle body. The body is provided with a sensing assembly 20.

The vehicle body positioning system further includes a positioning device 30. The positioning device 30 includes a base 32 and a coil assembly 31, and the coil assembly 31 is installed on the base 32.

When the sensing assembly 20 and the coil assembly 31 correspond in position, the sensing assembly 20 and the coil assembly 31 perform induction so as to position the body.

It should be understood that, in the process of positioning between the charging base station and the body, when inductive positioning is performed by means of the charging base station and an infrared sensor on the body, the infrared sensor is greatly affected by the environment and is prone to positioning errors. Therefore, accurate positioning between the body and the charging base station is required so as to ensure the stability and accuracy of automatic charging.

It can be understood that the body is accurately positioned on the base 32 so as to facilitate accurate connection between the body and the charging base station. Understandably, the charging base station necessarily includes at least one charging station for charging, for example, the above target charging station. Therefore, the sensing assembly 20 is provided on the body, and a coil structure capable of performing induction with the sensing assembly 20 is provided on the base 32. By means of electromagnetic induction, accurate positioning of the body on the base 32 is determined, so as to ensure the accuracy of connection between the body and the charging base station.

According to the technical solution of the present application, movement of the body drives the sensing assembly 20 to gradually approach the coil assembly 31 on the base 32. When the sensing assembly 20 is opposite to the coil assembly 31, the coil assembly 31 generates a magnetic field, and the sensing assembly 20 and the coil assembly 31 perform electromagnetic induction so as to position the body on the base 32, thereby improving positioning accuracy of the body.

In an embodiment, the sensing assembly includes a magnetic induction sensor. Further, the sensing assembly 20 includes a receiving plate 21 and a plurality of inductors 22. The receiving plate 21 is provided on a side of the body close to the base 32, and the plurality of inductors 22 are installed at intervals on a side of the receiving plate 21 close to the base 32. The plurality of inductors 22 are arranged in a triangular distribution, and the plurality of inductors 22 perform induction with the coil assembly 31 so as to position the body. In this embodiment, the position of the body is positioned through induction between the inductors and the coil assembly 31, and the above working principle is the working principle of the magnetic induction sensor. Therefore, the above inductors 22 may be regarded as part of the magnetic induction sensor in the sensing assembly, and each inductor corresponds to one magnetic induction sensor.

In an embodiment, the coil assembly is provided on a target charging station in a charging base station. Understandably, the charging base station necessarily includes at least one charging station for charging, for example, the target charging station. Induction between the target charging station and the self-moving device can generate the positioning induction value through induction between the coil assembly and the magnetic induction sensor when they correspond in position.

The target charging station is provided with a coil assembly, and induction between the target charging station and the self-moving device may specifically generate the positioning induction value through induction between the coil assembly and the magnetic induction sensor when they correspond in position. In a specific embodiment, the magnetic induction sensor includes a first magnetic induction sensor and a second magnetic induction sensor. Specifically, the first magnetic induction sensor may consist of two magnetic induction sensors, and the second magnetic induction sensor may consist of one magnetic induction sensor. The first magnetic induction sensor and the second magnetic induction sensor are arranged in a triangular distribution, facilitating induction between the first magnetic induction sensor and the second magnetic induction sensor and a recharging positioning coil, wherein the recharging positioning coil may specifically be a triangular recharging positioning coil. When recharging positioning is performed on the self-moving device according to the positioning induction value, only the first positioning induction value sensed by the first magnetic induction sensor may be used. When the first magnetic induction sensor senses the magnetic field of the recharging positioning coil, and the first positioning induction value is within a preset magnetic induction threshold range, the magnetic induction value of the second positioning induction value is detected from absent to present, until the second positioning induction value reaches a preset magnetic induction value, thereby realizing accurate recharging positioning of the self-moving device.

It can be understood that the receiving plate 21 is used to carry the plurality of inductors 22.

It can be understood that, in order to ensure accuracy of inductive positioning by the plurality of inductors 22, the magnetic field strength of the coil assembly 31 is preset. When the plurality of inductors 22 sense a magnetic field strength within a limited range, it is determined that the body has been positioned, wherein a current of the coil and a number of turns of the coil affect the preset magnetic field strength.

As shown in FIG. 8, in this embodiment, the plurality of inductors 22 can perform electromagnetic induction with the magnetic field generated by the coil assembly 31. The plurality of inductors 22 are arranged in a triangular distribution, and the magnetic field strength of the magnetic field generated by the coil assembly 31 is sensed by the inductors 22 distributed on the triangle. When the sensed magnetic field strengths are all within a limited range, accurate positioning of the body is realized.

It should be noted that the body needs to be accurately positioned on the base 32. If only a single positioning operation is performed, the positioning accuracy is low. Performing positioning on the body in stages is beneficial to ensuring positioning accuracy and improving positioning efficiency.

It can be understood that the coil assembly 31 includes a positioning element 311 and a plurality of beacon elements 312. The plurality of beacon elements 312 are arranged on the base 32 in parallel and at intervals, and the positioning element 311 is arranged on the base 32 in parallel with one of the beacon elements 312.

As shown in FIG. 8, in this embodiment, the number of the beacon elements 312 is three, for example, the above-mentioned left beacon, middle beacon, and right beacon. The three beacon elements 312 are arranged on the base 32 in parallel and at intervals. The three beacon elements 312 respectively generate magnetic fields, and the generated magnetic field strengths are different. The middle beacon element 312 is used to determine initial positioning of the body. When the body moves, the plurality of inductors 22 move and approach the three beacon elements 312. During movement of the body, the plurality of inductors 22 sense magnetic field strengths of the three beacon elements 312. When the plurality of inductors 22 sense different magnetic field strengths, or when the magnetic field strengths sensed by the plurality of inductors 22 are not the magnetic field strength of the middle beacon element 312, the body moves again for positioning. When the plurality of inductors 22 all sense the magnetic field strength of the middle beacon element 312, initial positioning of the body is realized.

It should be understood that there is a spacing between two adjacent beacon elements 312. When the plurality of inductors 22 all move to a position between two adjacent beacon elements 312, none of the plurality of inductors 22 performs induction with the beacon elements 312, which causes the body to keep moving continuously, thereby resulting in low positioning effect and efficiency for the body.

It can be understood that the inductor 22 includes a first inductor 221.

A spacing between any two adjacent beacon elements 312 is smaller than a spacing between two adjacent first inductors 221.

The first inductor 221 performs induction with both the beacon element 312 and the positioning element 311.

As shown in FIG. 10, in this embodiment, the number of the first inductors 221 is two. The two first inductors 221 are arranged in parallel and at intervals, and the two first inductors 221 and the second inductor 222 are arranged in a triangular distribution.

As shown in FIG. 10, in this embodiment, the spacing between any two adjacent beacon elements 312 is smaller than the spacing between two adjacent first inductors 221. When movement of the body drives the two first inductors 221 to approach the three beacon elements 312, at least one of the two first inductors 221 can perform electromagnetic induction with one of the beacon elements 312, so as to facilitate determination of positioning accuracy of the body.

For example, when at most one of the two first inductors 221 performs electromagnetic induction with the middle beacon element 312, it is determined that the body needs to move again for positioning; and when both first inductors 221 perform electromagnetic induction with the middle beacon element 312, it is determined that the body has achieved initial positioning.

It can be understood that the number of turns of the coil and a current passing through the coil affect the magnetic field strength of the coil. In order to ensure that there is a clear boundary between magnetic field strength inside the coil and magnetic field strength outside the coil, and to ensure uniformity of magnetic field strength inside the coil, the number of turns of the coil and the current need to be preset.

In an embodiment, the plurality of beacon elements 312 and the positioning element 311 are all coil structures.

Preferably, one beacon element 312 is connected to one switch circuit, the number of turns of the coil of the positioning element 311 is 2 to 4, and the number of turns of the coil of the beacon element 312 is 2 to 4.

It should be understood that one beacon element 312 is connected to one switch circuit. By controlling different PWM (Pulse Width Modulation) controllers, different beacon elements 312 generate magnetic field strengths of different frequencies, so that the plurality of inductors 22 can sense magnetic field strengths of different frequencies. By taking a preset magnetic field strength as an initial positioning position, when the plurality of inductors 22 sense the preset magnetic field strength, initial positioning of the body is realized.

It should be understood that the number of turns of the coil of the positioning element 311 is 2 to 4. Preferably, the number of turns of the coil of the positioning element 311 is 3, so as to ensure that there is a clear boundary between magnetic field strength inside the coil and magnetic field strength outside the coil, and to ensure uniformity of magnetic field strength inside the coil.

It should be understood that the number of turns of the coil of the beacon element 312 is 2 to 4. Preferably, the number of turns of the coil of the beacon element 312 is 3, so as to ensure that there is a clear boundary between magnetic field strength inside the coil and magnetic field strength outside the coil, and to ensure uniformity of magnetic field strength inside the coil.

In an embodiment, the inductor 22 further includes a second inductor 222. The receiving plate 21 includes a first plate member 211 and a second plate member 212, a plurality of the first inductors 221 are installed on the first plate member 211, the second inductor 222 is installed on the second plate member 212, and the plurality of first inductors 221 and the second inductor 222 are arranged in a triangular distribution.

The second inductor performs induction with the positioning element 311.

As shown in FIG. 8, in this embodiment, the first plate member 211 and the second plate member 212 are arranged at intervals, and two first inductors 221 are arranged at intervals on the first plate member 211. By adjusting a spacing between the first plate member 211 and the second plate member 212, a size of a triangle formed by the two first inductors 221 and the second inductor 222 is adjusted, so as to adapt to induction with the coil of the positioning element 311 and ensure accurate positioning of the body.

In an embodiment, the plurality of first inductors 221 all perform induction with the beacon element 312 arranged in parallel with the positioning element 311, and position the body for a first time.

As shown in FIG. 8, in this embodiment, the three beacon elements 312 and the positioning element 311 are distributed on the base 32 in a T shape.

In this embodiment, the plurality of first inductors 221 all perform induction with the beacon element 312 arranged in parallel with the positioning element 311, that is, the plurality of first inductors 221 all perform electromagnetic induction with the middle beacon element 312, so as to realize initial positioning of the body. Because the positioning element 311 and the middle beacon element 312 are arranged in parallel and at intervals, after initial positioning of the body is realized, the body is moved so that the plurality of inductors approach the positioning element 311, thereby facilitating accurate positioning of the body and improving positioning accuracy and efficiency of the body.

In an embodiment, the coil of the positioning element 311 is triangular, and the plurality of first inductors 221 and the second inductor 222 respectively perform induction with the coil of the positioning element 311, so as to position the body for a second time.

In this embodiment, the second inductor 222 and the two first inductors 221 are arranged in a triangular distribution, facilitating induction among the second inductor 222, the two first inductors 221, and the triangular positioning coil. The second inductor 222 and the two first inductors 221 all sense the magnetic field of the positioning element 311, and the sensed magnetic field strength range is within a limited range, thereby realizing secondary accurate positioning of the body by means of the triangle.

It should be noted that a sensing range of the first inductor 221 diverges outward with the first inductor 221 as a center, and therefore the sensing range of the first inductor 221 is a circular region. A sensing range of the second inductor 222 diverges outward with the second inductor 222 as a center, and therefore the sensing range of the second inductor 222 is a circular region. A diameter of the circular sensing range of the first inductor 221 is 20 mm to 50 mm, and a diameter of the circular sensing range of the second inductor 222 is 20 mm to 50 mm.

It can be understood that, in this embodiment, when the two first inductors 221 and the second inductor 222 all perform induction with the triangular positioning element 311, the sensing ranges of the two first inductors 221 are respectively inscribed in one angle of the triangular positioning element 311, and the sensing range of the second inductor 222 is inscribed in one angle of the triangular positioning element 311, thereby completing secondary accurate positioning of the body.

In an embodiment, a housing 10 is installed on a side of the body close to the base 32, the sensing assembly 20 is arranged in the housing 10, and a spacing between the inductor 22 and the coil assembly 31 is 60 mm to 80 mm.

In this embodiment, the sensing assembly 20 is carried by the body, so that the spacing between the sensing assembly 20 and the coil assembly 31 is 60 mm to 80 mm. Preferably, the spacing between the sensing assembly 20 and the coil assembly 31 is 70 mm, so that, when the inductor 22 performs electromagnetic induction with the positioning element 311 or the beacon element 312, the induction can be captured relatively accurately and clearly, which is beneficial to ensuring sensitivity and accuracy of induction of the plurality of inductors.

In order to ensure connection between the housing 10 and the body, this embodiment further includes a connecting mechanism 40, and the connecting mechanism 40 further includes a first connector 41, a second connector 42, and a third connector 43. The first connector 41, the second connector 42, and the third connector 43 are arranged at intervals on a surface of the housing 10 and are connected to the body.

As shown in FIGS. 8 and 9, in this embodiment, the first connector 41, the second connector 42, and the third connector 43 are all metal folded edge members. The first connector 41 and the third connector 43 are respectively arranged at two opposite ends of the housing 10, and the second connector 42 is connected to a middle portion of the surface of the housing 10. Through the first connector 41, the second connector 42, and the third connector 43, the housing 10 is firmly installed on the side of the body close to the base 32, thereby ensuring that, when the sensing assembly 20 faces the coil assembly 31, a spacing distance between the sensing assembly 20 and the coil assembly 31 will not change significantly, and ensuring accuracy and sensitivity of induction between the plurality of inductors 22 and the beacon element 312 or the positioning element 311, so as to ensure positioning accuracy of the body.

The present application further provides a vehicle body charging device, which includes the vehicle body positioning system 100 and a charging system. For the specific structure of the vehicle body positioning system 100, reference may be made to the foregoing embodiments. Since the vehicle body charging device employs all technical solutions of all the foregoing embodiments, it has at least all beneficial effects brought by the technical solutions of the foregoing embodiments, and details are not repeated herein. The charging system includes a transmitting module and a receiving module, wherein the transmitting module is arranged on one side of the base 32, and the transmitting module and the positioning device 30 are arranged at intervals; and the receiving module is arranged at a bottom of the body.

In this embodiment, after the body achieves initial positioning relative to the middle beacon element 312 on the base 32 and achieves secondary accurate positioning relative to the positioning element 311, the receiving module of the body performs induction with the transmitting module on the base 32, and charging of the body begins. The positioning device 30 and the transmitting module constitute a charging base station.

### Embodiment 6

The embodiments of the present application further provide a computer-readable storage medium having computer-readable program instructions stored thereon, the computer-readable program instructions being used to execute the recharging positioning method in the foregoing Embodiment 1.

The computer-readable storage medium provided in the embodiments of the present application may, for example, be a USB flash drive, but is not limited to an electrical, magnetic, optical, electromagnetic, infrared, or semiconductor system, apparatus, or device, or any suitable combination thereof. More specific examples of the computer-readable storage medium may include, but are not limited to: an electrical connection having one or more wires, a portable computer disk, a hard disk, a random access memory (RAM), a read-only memory (ROM), an erasable programmable read-only memory (EPROM) or flash memory, an optical fiber, a portable compact disc read-only memory (CD-ROM), an optical storage device, a magnetic storage device, or any suitable combination of the foregoing. In this embodiment, the computer-readable storage medium may be any tangible medium that contains or stores a program, and that can be used by or in conjunction with an instruction execution system, apparatus, or device. Program code contained on the computer-readable storage medium may be transmitted using any appropriate medium, including but not limited to wire, optical cable, RF (Radio Frequency), and the like, or any suitable combination of the foregoing.

The computer-readable storage medium may be included in an electronic device. Alternatively, it may exist independently without being assembled into the electronic device.

The computer-readable storage medium carries one or more programs. When the one or more programs are executed by an electronic device, the electronic device is caused to: acquire the positioning induction value on a recharging path through the magnetic induction sensor, wherein the recharging path refers to a path along which the self-moving device moves toward the target charging station; and perform recharging positioning on the self-moving device according to the positioning induction value.

Computer program code for carrying out operations of the present disclosure may be written in one or more programming languages, or a combination thereof, the programming languages including object-oriented programming languages such as Java, Smalltalk, and C++, as well as conventional procedural programming languages such as the "C" language or similar programming languages. The program code may execute entirely on a user computer, partly on a user computer, as an independent software package, partly on a user computer and partly on a remote computer, or entirely on a remote computer or server. In a case involving a remote computer, the remote computer may be connected to the user computer through any type of network, including a local area network (LAN) or a wide area network (WAN), or may be connected to an external computer, for example, through the Internet using an Internet service provider.

The flowcharts and block diagrams in the drawings illustrate architectures, functions, and operations of possible implementations of systems, methods, and computer program products according to various embodiments of the present application. In this regard, each block in a flowchart or block diagram may represent a module, a program segment, or a part of code, the module, the program segment, or the part of code containing one or more executable instructions for implementing specified logical functions. It should also be noted that, in some alternative implementations, the functions indicated in the blocks may occur in an order different from the order indicated in the drawings. For example, two blocks shown in succession may in fact be executed substantially in parallel, and sometimes may be executed in a reverse order, depending on the functions involved. It should also be noted that each block in the block diagrams and/or flowcharts, and combinations of blocks in the block diagrams and/or flowcharts, may be implemented by a dedicated hardware-based system that performs specified functions or operations, or by a combination of dedicated hardware and computer instructions.

The modules described in the embodiments of the present disclosure may be implemented by software, or may be implemented by hardware. In some cases, the names of the modules do not constitute limitations on the modules themselves.

The computer-readable storage medium provided in the present application stores computer-readable program instructions for executing the foregoing recharging positioning method, and can solve the technical problem that, in the recharging positioning process of an existing self-moving device, a relatively large positioning error is likely to occur, thereby reducing recharging positioning accuracy of the self-moving device. Compared with the prior art, the beneficial effects of the computer-readable storage medium provided in the embodiments of the present application are the same as the beneficial effects of the recharging positioning method provided in the foregoing Embodiment 1 or Embodiment 2, and thus details are not repeated herein.

### Embodiment 7

The embodiments of the present application further provide a computer program product, including a computer program, wherein, when the computer program is executed by a processor, the steps of the foregoing recharging positioning method are implemented.

The computer program product provided in the present application can solve the technical problem that, in the recharging positioning process of an existing self-moving device, interference caused by complex environmental factors is likely to affect recharging positioning of the self-moving device, such that a relatively large positioning error is likely to occur during recharging positioning, thereby reducing recharging positioning accuracy of the self-moving device. Compared with the prior art, the beneficial effects of the computer program product provided in the embodiments of the present application are the same as the beneficial effects of the recharging positioning method provided in the foregoing Embodiment 1 or Embodiment 2, and thus details are not repeated herein.

It should be noted that in the present application, the terms "comprising", "including", or any other variation thereof are intended to cover non-exclusive inclusion, so that a process, method, article or system including a series of elements includes not only those elements, but also other elements not explicitly listed, or elements inherent to such process, method, article or system. Without more limitations, an element defined by the phrase "comprising one" does not exclude the existence of other identical elements in the process, method, article or system that includes the element.

The above serial numbers of the embodiments of the present application are only for description, and do not represent the superiority of the embodiments.

Through the description of the above embodiments, those skilled in the art can clearly understand that the methods of the above embodiments can be realized by means of software and necessary general hardware platform, and of course they can also be realized by hardware, but in many cases, the former is the better embodiment. Based on this understanding, the technical solutions of the present application may be embodied in the form of a software product, which is stored in a storage medium (such as ROM/RAM, magnetic disk, optical disk, etc.) and include several instructions to make a terminal device (which may be a mobile phone, a computer, a server, or a network device, etc.) execute the methods described in the above embodiments of the present application.

The above are merely preferred embodiments of this application, not intended to limit the patent scope of this application. Any equivalent structure or equivalent process transformation made by using the contents of this application specification and drawings, or directly or indirectly used in other related technical fields, are included in the patent protection scope of this application by the same logic.

## Claims

1. A recharging positioning method, applied to a self-moving device, wherein induction is performed between the self-moving device and a target charging station to generate a positioning induction value, and the self-moving device is provided with a magnetic induction sensor, the recharging positioning method comprising:
acquiring the positioning induction value on a recharging path through the magnetic induction sensor, wherein the recharging path refers to a path along which the self-moving device moves toward the target charging station; and
performing recharging positioning on the self-moving device according to the positioning induction value.

2. The recharging positioning method according to claim 1, wherein the positioning induction value comprises a pre-positioning induction value and a recharging positioning induction value, and the step of performing recharging positioning on the self-moving device according to the positioning induction value comprises:
detecting whether a current beacon at which the self-moving device is located is a middle beacon, wherein the current beacon is arranged on the target charging station;
if the self-moving device is located at the middle beacon, performing recharging positioning on the self-moving device according to the recharging positioning induction value; and
if the self-moving device is not located at the middle beacon, moving the self-moving device according to the pre-positioning induction value until the self-moving device is moved to the middle beacon.

3. The recharging positioning method according to claim 1, wherein the step of performing recharging positioning on the self-moving device according to the positioning induction value comprises:
detecting whether the positioning induction value reaches a preset magnetic induction threshold;
if yes, determining that recharging positioning of the self-moving device is completed;
if not, adjusting a position of the self-moving device to obtain an adjusted position; and
taking a magnetic induction value sensed by the magnetic induction sensor at the adjusted position as the positioning induction value, and returning to the step of detecting whether the positioning induction value reaches the preset magnetic induction threshold.

4. The recharging positioning method according to claim 3, wherein the target charging station is provided with a coil assembly, and the magnetic induction sensor and the coil assembly perform induction to generate the positioning induction value when their positions correspond to each other, wherein the magnetic induction sensor comprises a first magnetic induction sensor and a second magnetic induction sensor, the first magnetic induction sensor and the second magnetic induction sensor being distributed in a triangular manner, and the positioning induction value comprises a first positioning induction value sensed by the first magnetic induction sensor and a second positioning induction value sensed by the second magnetic induction sensor,
wherein the step of performing recharging positioning on the self-moving device according to the positioning induction value comprises:
detecting the second positioning induction value when the first positioning induction value reaches the preset magnetic induction threshold; and
iteratively adjusting the position of the self-moving device according to a magnitude relationship between the second positioning induction value and the preset magnetic induction threshold until the second positioning induction value reaches the preset magnetic induction threshold.

5. The recharging positioning method according to claim 2, wherein, before the step of acquiring the positioning induction value on the recharging path through the magnetic induction sensor, the recharging positioning method further comprises:
detecting, by a preset sensor in the self-moving device, whether a first obstacle exists between the target charging station and the self-moving device;
if the first obstacle exists, determining whether to move the first obstacle when the first obstacle is detected as a movable obstacle;
if the first obstacle does not exist, controlling the self-moving device to move to a first preset position;
detecting, at the first preset position, whether a second obstacle exists on a recharging positioning surface of the target charging station; and
if the second obstacle exists, cleaning the second obstacle, and, after determining that the cleaning is completed, determining whether the recharging positioning surface satisfies a recharging positioning condition by performing secondary detection on the recharging positioning surface.

6. The recharging positioning method according to claim 5, wherein the step of detecting, at the first preset position, whether a second obstacle exists on the recharging positioning surface of the target charging station comprises:
acquiring, at the first preset position, real-time body data corresponding to the recharging positioning surface of the target charging station;
extracting historical body data corresponding to the recharging positioning surface, wherein the historical body data refers to body data of the self-moving device when the second obstacle is absent from the recharging positioning surface; and
determining whether the second obstacle exists on the recharging positioning surface of the target charging station by comparing the real-time body data with the historical body data.

7. The recharging positioning method according to claim 1, wherein the recharging positioning method further comprises:
acquiring a communication condition between the self-moving device and the target charging station;
if the communication condition is abnormal, after the self-moving device is located at a first preset position, acquiring the positioning induction value on the recharging path through the magnetic induction sensor to determine whether the target charging station has moved;
if it is determined that the target charging station has moved, controlling the self-moving device to move to a second preset position where a preset charging station is currently located;
detecting whether an alternative charging station exists within a preset communication range; and
after determining that the alternative charging station exists within the preset communication range, controlling the self-moving device to move toward the alternative charging station.

8. A self-moving device, wherein the self-moving device comprises a head, a body, a recharging positioning device, a memory, a processor, and a recharging positioning program for the self-moving device stored in the memory and executable on the processor, the head being detachably connected to the body, and the recharging positioning device, the memory and the processor being arranged on the body, wherein the recharging positioning program for the self-moving device is configured to implement the steps of the recharging positioning method according to any one of claims 1 to 7.

9. A vehicle body positioning system, wherein the vehicle body positioning system comprises the self-moving device according to claim 8, and the self-moving device comprises the head and the body; the body is provided with a sensing assembly;
the vehicle body positioning system further comprises a positioning device, wherein the positioning device comprises a base and a coil assembly, and the coil assembly is mounted on the base;
wherein, when the sensing assembly and the coil assembly correspond in position, the sensing assembly and the coil assembly perform induction to locate a position of the body.

10. The vehicle body positioning system according to claim 9, wherein the sensing assembly comprises a magnetic induction sensor.

11. The vehicle body positioning system according to claim 10, wherein the magnetic induction sensor comprises a first magnetic induction sensor and a second magnetic induction sensor, and the first magnetic induction sensor and the second magnetic induction sensor are distributed in a triangular manner.

12. The vehicle body positioning system according to claim 10, wherein the coil assembly is arranged on the target charging station in a charging base station, and induction between the target charging station and the self-moving device is performed by induction between the coil assembly and the magnetic induction sensor when their positions correspond, so as to generate the positioning induction value.

13. The vehicle body positioning system according to claim 9, wherein the sensing assembly comprises a receiving plate and a plurality of inductors, the receiving plate being arranged on a side of the body close to the base, the plurality of inductors being mounted at intervals on a side of the receiving plate close to the base, the plurality of inductors being distributed in a triangular manner, and the plurality of inductors and the coil assembly performing induction to locate the position of the body.

14. The vehicle body positioning system according to claim 13, wherein the coil assembly comprises a positioning element and a plurality of beacon elements, the plurality of beacon elements being arranged side by side and at intervals on the base, and the positioning element being arranged on the base and side by side with one of the beacon elements.

15. The vehicle body positioning system according to claim 14, wherein the inductors comprise a first inductor;
a spacing between any two adjacent beacon elements is smaller than a spacing between two adjacent first inductors; and
the first inductor performs induction with both the beacon elements and the positioning element.

16. The vehicle body positioning system according to claim 14, wherein the plurality of beacon elements and the positioning element are each of a coil structure, a number of coil turns of the positioning element being 2-4, and a number of coil turns of each beacon element being 2-4.

17. The vehicle body positioning system according to claim 15, wherein the inductors further comprise a second inductor; the receiving plate comprises a first plate member and a second plate member, a plurality of the first inductors being mounted on the first plate member, the second inductor being mounted on the second plate member, and the plurality of the first inductors and the second inductor being distributed in a triangular manner; and
the second inductor performs induction with the positioning element.

18. The vehicle body positioning system according to claim 17, wherein the plurality of first inductors perform induction with the beacon element arranged side by side with the positioning element, for first positioning of the body.

19. The vehicle body positioning system according to claim 17, wherein the coil of the positioning element is triangular, and the plurality of first inductors and the second inductor respectively perform induction with the coil of the positioning element, for second positioning of the body.

20. The vehicle body positioning system according to claim 17, wherein a housing is mounted on a side of the body close to the base, the sensing assembly is arranged in the housing, and an induction distance between the inductors and the coil assembly is 60-80 mm.
